# EUROPÄISCHE PATENTSCHRIFT

(11) **EP 3 838 352 B1**
(45) Veröffentlichungstag und Bekanntmachung des Hinweises auf die Patenterteilung: **20.09.2023**
(21) Anmeldenummer: 20208525.4
(22) Anmeldetag: 19.11.2020
(51) Int. Cl.: A62C 37/00, B60R 16/02, F04B 23/00

(54) **BEDIENSYSTEM ZUR BEDIENUNG VON FUNKTIONSEINHEITEN**
OPERATING SYSTEM FOR OPERATING FUNCTIONAL UNITS
SYSTÈME DE COMMANDE DESTINÉ À L'UTILISATION DES UNITÉS FONCTIONNELLES

(30) Priorität: 17.12.2019 DE 102019219856
(43) Veröffentlichungstag der Anmeldung: 23.06.2021
(73) Patentinhaber: Albert Ziegler GmbH, 89537 Giengen a. d. Brenz (DE)
(72) Erfinder: Ruhdorfer, Max, 89079 Ulm (DE); Boden, Ingo, 89129 Langenau (DE); Quintenz, Tobias, 89275 Elchingen (DE)
(74) Vertreter: Patentanwälte Magenbauer & Kollegen Partnerschaft mbB

(56) Entgegenhaltungen:
- DE-A1- 19 505 845
- DE-B4- 10 393 862
- DE-U1-202010 016 193
- US-A1- 2003 158 635

## Beschreibung

Die Erfindung betrifft ein Bediensystem zur Bedienung von Funktionseinheiten, insbesondere auf dem Gebiet der Feuerwehrtechnik.

Bediensysteme zur Bedienung von Funktionseinheiten sind seit langem in unzähligen Varianten bekannt. Insbesondere auch auf dem Gebiet der Feuerwehrtechnik sind Bediensysteme bekannt, bei denen Funktionseinheiten mittels einer Bedieneinheit bedient werden. Als Beispiel ist hier eine Einbaupumpe in einem Feuerwehrfahrzeug zu nennen, die in der Regel im Fahrzeugheck eingebaut und über das Fahrzeugheck zugänglich ist. Bei der zugehörigen Bedieneinheit handelt es sich um ein Pumpenbedienfeld, das in der Nähe der Pumpe angeordnet ist. Die Zuordnung der Bedieneinheit in der Nähe der Funktionseinheit, also beispielsweise der Einbaupumpe, gibt für den Bediener wie selbstverständlich die Information, dass über das Bedienfeld die Pumpe und deren Funktionen zu bedienen, insbesondere zu steuern sind. Auf anderen Gebieten sind Fernbedienungen gang und gäbe, mit denen drahtlos, insbesondere mittels Funkfernsteuerung Funktionseinheiten bedient werden können.

Allerdings sind Funkfernsteuerungen auf dem Gebiet der Feuerwehrtechnik sicherheitstechnisch nicht zuverlässig oder müssten mit erheblichem Aufwand, beispielsweise mittels Sicherheitsprotokoll, abgesichert werden, so dass Funkfernsteuerungen sich auf diesem Gebiet nicht durchgesetzt haben.

Auf dem Gebiet der Feuerwehrtechnik ist es bereits seit längerem bekannt, dass die verschiedenen Funktionseinheiten mittels eines Feldbussystems, insbesondere CAN-Bussystems, miteinander vernetzt sind. Insbesondere auch dadurch ist eine Bedienung bzw. Steuerung der verschiedenen Funktionseinheiten an Bord eines Einsatzfahrzeuges von einer zentralen Steuerkonsole möglich. Ein solches System ist zum Beispiel im Dokument DE 195 05 845 A1 offenbart.

Aufgabe der Erfindung ist es, ein Bediensystem der Eingangs erwähnten Art zu schaffen, mit denen sich Funktionseinheiten sicherheitstechnisch zuverlässig und flexibel an sich ändernde Umgebungsbedingungen anpassbar bedienen lassen.

Diese Aufgabe wird durch ein Bediensystem mit den Merkmalen des unabhängigen Anspruchs 1 gelöst. Weiterbildungen der Erfindung sind in den Unteransprüchen dargestellt.

Das erfindungsgemäße Bediensystem zur Bedienung von Funktionseinheiten, insbesondere auf dem Gebiet der Feuerwehrtechnik, weist wenigstens eine Systembasis auf, die mit einem Bus-System ausgestattet ist und weist wenigstens eine zum Bediensystem gehörende Funktionseinheit auf, wobei der Funktionseinheit eine Bedieneinheit zugeordnet ist, die in der Lage ist, funktionsspezifische Steuersignale auszugeben, die von der zugeordneten Funktionseinheit erkennbar sind, wobei die Bedieneinheit an einer Stamm-Schnittstelle an die Systembasis lösbar andockbar oder angedockt ist, wobei die Systembasis wenigstens eine Zusatz-Schnittstelle aufweist, die mit der wenigstens einen Stamm-Schnittstelle über das Bus-System gekoppelt ist und wobei die Bedieneinheit wahlweise an der Stamm-Schnittstelle oder an der Zusatz-Schnittstelle andockbar ist.

Die Bedienbarkeit einer Funktionseinheit durch eine an der Zusatz-Schnittstelle angedockte Bedieneinheit erlaubt eine flexible Anpassung an unterschiedliche Umgebungsbedingungen. In der Regel befindet sich die Stamm-Schnittstelle in der Nähe der zugeordneten Funktionseinheit. Sollte diese Stamm-Schnittstelle jedoch nicht zugänglich sein, so ist es erfindungsgemäß möglich, die Bedieneinheit alternativ an die Zusatz-Schnittstelle anzukoppeln. Da die Bedieneinheit in der Lage ist funktionseinheitsspezifische Steuersignale auszugeben, ist es in diesem Fall gleichrangig ob die Bedieneinheit an der Stamm-Schnittstelle oder an der Zusatz-Schnittstelle angekoppelt ist. Es ist auch möglich, dass sowohl Stamm-Schnittstelle als auch Zusatz-Schnittstelle jeweils mit einer derselben Funktionseinheit zugeordneten Bedieneinheit belegt sind. Die Bedieneinheiten sind in diesem Fall also redundant vorhanden. Eine Umordnung, insbesondere Umstecken ist in diesem Fall nicht notwendig.

Ferner ist es auch möglich, dass Bedieneinheiten während des laufenden Betriebs von der Stamm-Schnittstelle oder Zusatz-Schnittstelle abgenommen und an der Zusatz-Schnittstelle oder Stamm-Schnittstelle angeordnet werden. Die Bedieneinheiten können bei laufendem Betrieb umgesteckt werden ("hot plug").

Bei einer Weiterbildung der Erfindung ist die wenigstens eine Systembasis ausgewählt aus der Gruppe bestehend aus Einsatzfahrzeug, insbesondere Feuerwehrfahrzeug, Tragkraftspritze, Pumpenaggregat oder Werfer. Bei dem Werfer kann es sich um einen "stand alone"-Werfer handeln, der nicht in ein Einsatzfahrzeug eingebaut ist.

In besonders bevorzugter Weise ist die wenigstens eine Funktionseinheit ausgewählt aus der Gruppe bestehend aus Pumpe, Beleuchtungseinrichtung, insbesondere Lichtmast, Werfereinrichtung, Kamera, Drehleiter, abrollbares Leitergerüst, Teleskopmast und Teleskopmastbühne.

Es ist beispielsweise möglich, dass das Bediensystem eine Systembasis in Form eines Einsatzfahrzeugs, insbesondere Feuerwehrfahrzeugs, umfasst, das mehrere Funktionseinheiten beispielsweise in Form einer Pumpe, einem Lichtmast, und einer Werfereinrichtung aufweist. Die Pumpe ist zweckmäßigerweise als Einbaupumpe im Heck des Feuerwehrfahrzeugs eingebaut. Die Stamm-Schnittstelle für die Bedienung der Pumpe befindet sich in der Regel in der Nähe der Pumpe. Die Bedieneinheit ist in der Regel an der Stamm-Schnittstelle angedockt. Nun kann es beispielsweise vorkommen, dass das Feuerwehrfahrzeug im Einsatzfall so abgestellt werden muss, dass das Heck nicht mehr zugänglich ist, beispielsweise falls das Fahrzeugheck an eine Häuserwand herangefahren werden muss. In diesem Fall wäre es mit herkömmlichen Bediensystemen nicht möglich, die Einbaupumpe sicherheitstechnisch zuverlässig zu bedienen. Erfindungsgemäß ist es jedoch möglich, das Bediensystem vor der endgültigen Parkposition des Feuerwehrfahrzeuges abzunehmen und an der Zusatz-Schnittstelle anzudocken, von wo aus dann eine Bedienung der Einbaupumpe möglich ist. Eine derart flexible Bedienbarkeit ist selbstverständlich für sämtliche Funktionseinheiten der Systembasis möglich, also im Beispielsfall auch für den Lichtmast und die Werfereinrichtung.

Ferner ist es möglich, mehrere Systembasen vorzusehen, beispielsweise mehrere Einsatzfahrzeuge, insbesondere Feuerwehrfahrzeuge. Auch ist es möglich, mehrere verschiedene Arten von Systembasen einzusetzen, beispielsweise eine Kombination aus Einsatzfahrzeug, insbesondere Feuerwehrfahrzeug und Tragkraftspritze. Zweckmäßigerweise umfasst eine Systembasis mehrere Funktionseinheiten. Es ist beispielsweise auch möglich, eine Bedieneinheit der einen Systembasis, beispielsweise eines Einsatzfahrzeugs, insbesondere Feuerwehrfahrzeugs, abzunehmen und an der Zusatz-Schnittstelle oder Stamm-Schnittstelle einer anderen insbesondere anderen Art von Systembasis, beispielsweise einer Tragkraftspritze, anzudocken.

Zum schnellen Wechsel der Bedieneinheit zwischen verschiedenen Schnittstellen ist es von Vorteil, dass die Bedieneinheit eine mit der Stamm-Schnittstelle oder der Zusatz-Schnittstelle zusammenpassende und mit diesen in Kontakt bringbare Gegen-Schnittstelle aufweist.

In besonders bevorzugter Weise sind Stamm-Schnittstelle, Zusatz-Schnittstelle und Gegen-Schnittstelle als Steckverbinder ausgebildet, wobei vorzugsweise der Steckverbinder als Stecker oder Buchse ausgestaltet ist. Hierbei ist es möglich, dass die Gegen-Schnittstelle als Buchse und die komplementäre Stamm-Schnittstelle oder Zusatz-Schnittstelle als Stecker ausgebildet sind. Alternativ ist es natürlich auch denkbar, die Gegen-Schnittstelle als Stecker und die komplementären Stamm-Schnittstelle oder Zusatz-Schnittstelle als Buchse auszugestalten. Vorzugsweise sind wasserdichte Steckverbindungen zwischen Stamm-Schnittstelle oder Zusatz-Schnittstelle einerseits und Gegen-Schnittstelle andererseits vorgesehen.

Prinzipiell wäre es auch möglich, anstelle der Steckverbindung andere kontaktbehaftete Verbindungen zwischen der Gegen-Schnittstelle und der zugeordneten Stamm-Schnittstelle oder Zusatz-Schnittstelle vorzusehen, beispielsweise Rastverbindungen, Clipsverbindungen oder dergleichen.

Die Verbindung zwischen der Gegen-Schnittstelle an der Bedieneinheit und der Stamm-Schnittstelle oder Zusatz-Schnittstelle an der Systembasis kann drahtgebunden über ein elektrisches Kabel erfolgen. Es ist noch einmal zu erwähnen, dass eine Drahtlosverbindung zwischen der Gegen-Schnittstelle und der zugeordneten Stamm-Schnittstelle oder Zusatz-Schnittstelle insbesondere mittels Funk sicherheitstechnisch nicht zuverlässig ist, so dass hier einer drahtgebundenen Verbindung zwischen der Gegen-Schnittstelle an der Bedieneinheit und der Stamm-Schnittstelle oder Zusatz-Schnittstelle an der Systembasis den Vorrang zu geben ist. Für sicherheitstechnisch weniger relevante Funktionen, beispielsweise zur Abfrage statistischer Daten oder zur Abfrage von Service-Intervallen wären auch Drahtlosverbindungen denkbar. Die Schnittstellen können daher zusätzlich zur drahtlosen Kommunikation mit zugeordneten Bedieneinheiten eingerichtet sein.

Bei einer Weiterbildung der Erfindung weist das elektrische Kabel an beiden Enden jeweils einen Steckverbinder auf, über die es einerseits mit der Gegen-Schnittstelle an der Bedieneinheit und andererseits mit der Stamm-Schnittstelle oder der Zusatz-Schnittstelle verbunden ist.

Es ist möglich, dass die Bedieneinheit einen Identifikator, insbesondere eine Adresse, aufweist. Damit ist es möglich, dass Steuersignale unabhängig vom Andockort der Bedieneinheit stets zur richtigen, zugeordneten Funktionseinheit gelangen.

In besonders bevorzugter Weise handelt es sich bei dem Bus-System um ein Feldbus-System, insbesondere CAN-Bus-System.

Bei einer Weiterbildung der Erfindung weist das Bediensystem eine externe oder an Bord der wenigstens einen Systembasis befindlichen Bedienzentrale, insbesondere Steuerkonsole, zur Bedienung sämtlicher Funktionseinheiten auf, die wenigstens eine, vorzugsweise mehrere Zentral-Schnittstellen aufweist, an die die Bedieneinheit andockbar ist. Zweckmäßigerweise weist die Bedienzentrale mehrere Zentral-Schnittstellen auf, insbesondere so viele wie es zu bedienende Funktionseinheiten gibt, wodurch es möglich ist, sämtliche Bedieneinheiten an den Zentral-Schnittstellen der Bedienzentrale anzudocken.

Bevorzugte Ausführungsbeispiele der Erfindung sind in der Zeichnung dargestellt und werden im Folgenden näher erläutert. In der Zeichnung zeigen:
- Figur 1: eine schematische Darstellung eines ersten Ausführungsbeispiels des erfindungsgemäßen Bediensystems mit einer Systembasis in Form eines Feuerwehrfahrzeugs,
- Figur 2: eine schematische Darstellung einer Verbindung zwischen einer Bedieneinheit und einer Stamm-Schnittstelle oder Zusatz-Schnittstelle des erfindungsgemäßen Bediensystems,
- Figur 3: eine schematische Darstellung eines zweiten Ausführungsbeispiels des erfindungsgemäßen Bediensystems mit einer Vielzahl von Systembasen in Form von Feuerwehrfahrzeugen, Robotern und Pumpen.

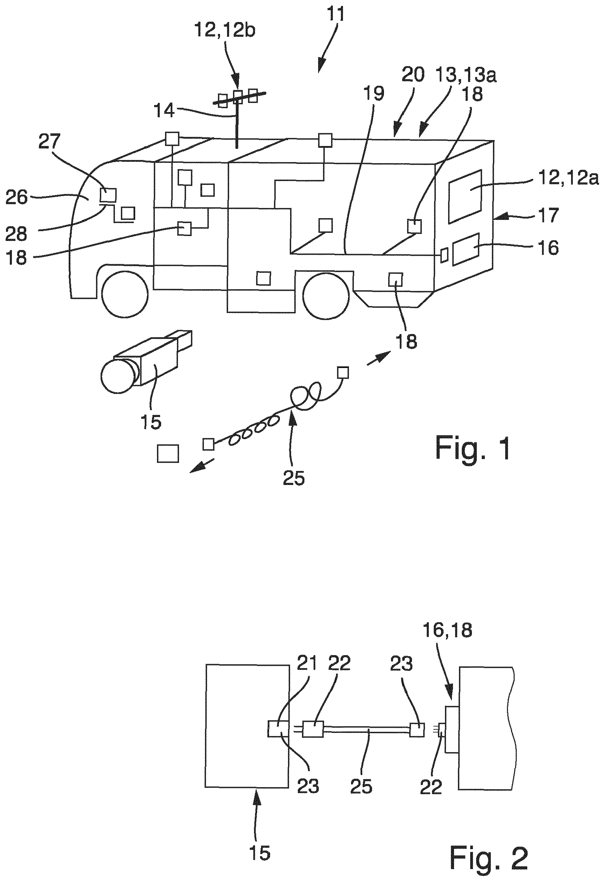

Die Figur 1 zeigt ein erstes Ausführungsbeispiel des erfindungsgemäßen Bediensystems 11 zur Bedienung von Funktionseinheiten 12 auf dem Gebiet der Feuerwehrtechnik. Das Bediensystem 11 besitzt eine Systembasis 13, das gemäß erstem Ausführungsbeispiel beispielhaft in Form eines Feuerwehrfahrzeugs 13a gezeigt und im Folgenden beschrieben wird.

Im gezeigten Beispielsfall besitzt das Feuerwehrfahrzeug 13a mehrere Funktionseinheiten 12, von denen beispielhaft Funktionseinheiten 12 in Form einer Einbaupumpe 12a und einer Beleuchtungseinrichtung 12b mit Lichtmast 14 gezeigt sind. Die Funktionseinheiten 12, also im Beispielsfall die Einbaupumpe 12a und die Beleuchtungseinrichtung 12b werden über zugeordnete Bedieneinheiten 15 bedient, insbesondere werden Funktionen dieser Funktionseinheiten gesteuert.

Die Einbaupumpe 12a dient dazu saugseitig Löschwasser anzusaugen und druckseitig an damit verbundene Feuerwehrschläuche abzugeben, wo das Löschwasser dann über Strahlrohre austritt. Eine der Hauptfunktionen einer solchen Einbaupumpe 12a, die über eine zugeordnete Pumpen-Bedieneinheit 15a gesteuert wird, ist die Fördermenge bzw. der Förderstrom in Abhängigkeit zum Gesamtförderdruck. Der Bediener kann also über die Bedieneinheit 15 eine Erhöhung oder Verringerung des Förderstroms veranlassen. Die Einbaupumpe 12a ist zweckmäßigerweise als Feuerlöschkreiselpumpe ausgebildet.

Die Bedieneinheiten 15 sind in der Lage funktionseinheitsspezifische Steuersignale auszugeben, die von der zugeordneten Funktionseinheit 12 erkennbar sind.

Von den Bedieneinheiten 15 ist beispielhaft lediglich die Pumpen-Bedieneinheit 15a gezeigt. Auch für die Beleuchtungseinrichtung 12b gibt es eine Bedieneinheit, die jedoch nicht dargestellt ist. Als Funktion für die Beleuchtungseinrichtung 12b wäre beispielsweise die Ausrichtung der Scheinwerferbrücke des Lichtmastes 14 zu nennen.

Wie insbesondere in Figur 1 gezeigt, ist die Bedieneinheit 15 an einer Stamm-Schnittstelle 16 an der Systembasis 13 lösbar angedockt. Im Beispielsfall befindet sich die Stamm-Schnittstelle 16 für die Einbaupumpe 12a in deren Nähe am Heck 17 des Feuerwehrfahrzeugs 13a.

Ein wesentlicher Aspekt der Erfindung ist, dass die Systembasis 13, also im Beispielsfall das Feuerwehrfahrzeug 13a wenigstens eine Zusatz-Schnittstelle 18 aufweist, die mit der wenigstens einen Stamm-Schnittstelle 16 gekoppelt ist. Ferner ist ein wesentlicher Aspekt der Erfindung, dass die Systembasis 13, insbesondere das Feuerwehrfahrzeug 13a, ein Bus-System 19 aufweist, über das die wenigstens eine Stamm-Schnittstelle 16 und die wenigstens eine Zusatz-Schnittstelle 18 gekoppelt sind.

Im gezeigten Beispielsfall sind mehrere Zusatz-Schnittstellen 18 vorgesehen, die sich beispielsweise an den Längsseiten des Fahrzeugaufbaus 20 befinden.

Wie insbesondere in Figur 2 gezeigt, besitzt die Bedieneinheit 15 also beispielsweise die Pumpen-Bedieneinheit 15a eine mit der Stamm-Schnittstelle 16 oder der Zusatz-Schnittstelle 18 zusammenpassende und mit diesen in Kontakt bringbare Gegen-Schnittstelle 21. Im Beispielsfall sind Stamm-Schnittstelle 16, Zusatz-Schnittstelle 18 und Gegen-Schnittstelle als Steckverbinder ausgebildet, wobei zueinander komplementäre Stecker 22 oder Buchsen 23 vorgesehen sind.

Im gezeigten Beispielsfall weist die Einheit 15 ein Bedieneinheits-Gehäuse 24 auf, an dessen Außenseite die Gegen-Schnittstelle 21 in Form einer Buchse 23 sitzt. Die Bedieneinheit 15 besitzt ferner ein am Bedieneinheits-Gehäuse 24 angeordnetes Display (nicht dargestellt) oder sonstige Bedienelemente wie Joysticks oder dergleichen.

Die Stamm-Schnittstelle 16 oder Zusatz-Schnittstelle 18 ist ortsfest an der Systembasis 13, also beispielsweise am Feuerwehrfahrzeug 13a angeordnet. Im Beispielsfall besitzt die Zusatz-Schnittstelle oder Stamm-Schnittstelle 16 ein Steckverbinder in Form eines Steckers 22.

Wie ferner in Figur 2 gezeigt, ist zwischen der Stamm-Schnittstelle 16 oder Zusatz-Schnittstelle 18 und der Gegen-Schnittstelle 21 an der Bedieneinheit 15 ein elektrisches Kabel 25 als Verlängerungskabel eingeschaltet. Dadurch ist die Bedieneinheit 15 von der zugeordneten Schnittstelle 16, 18 abnehmbar, wobei sich dennoch die Bedienaufgaben durchführen lassen.

Wie insbesondere in Figur 1 gezeigt, besitzt die Systembasis 13 in Form des Feuerwehrfahrzeugs 13a eine insbesondere im Fahrerhaus 26 angeordnete Bedienzentrale 27. Die Bedienzentrale 27 ist im Beispielsfall als Steuerkonsole ausgebildet mit einer der Anzahl der Funktionseinheiten 12 entsprechenden Zahl von Zentral-Schnittstellen 28, an die die Bedieneinheiten 15 andockbar sind. Zweckmäßigerweise lässt sich die Bedienung der Funktionseinheit, also beispielsweise der Einbaupumpe 12a also von der Stamm-Schnittstelle 16 am Heck 17, von einer Zusatz-Schnittstelle 18 an der Längsseite der des Fahrzeugaufbaus 20 oder von einer Zentral-Schnittstelle 28 an der Steuerkonsole aus bedienen.

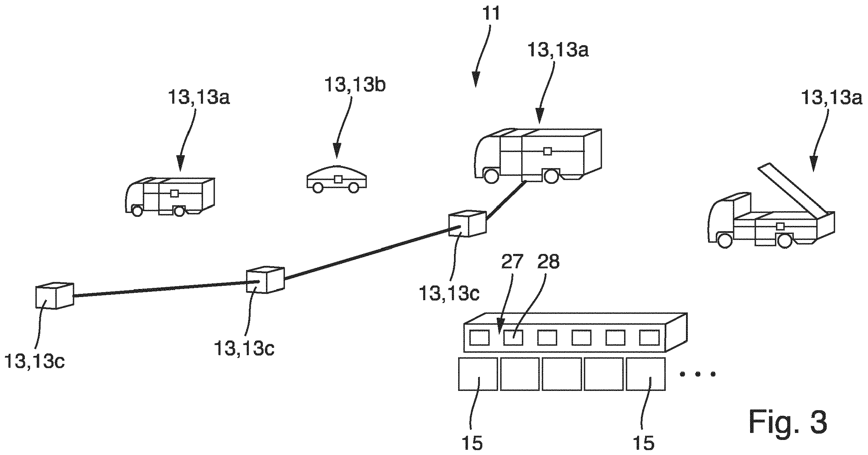

Figur 3 zeigt ein zweites Ausführungsbeispiel des erfindungsgemäßen Bediensystems 11. Im Gegensatz zum zuvor beschriebenen ersten Ausführungsbeispiel sind hier mehrere Systembasen 13 vorgesehen, die beispielhaft in Form von drei Feuerwehrfahrzeugen 13a, einem Roboter 13b und dreier Tragkraftspritzen 13c gezeigt sind. Auch hier ist es möglich, die verschiedenen Funktionseinheiten, beispielsweise die Bewegung einer Drehleiter, mittels einer Bedieneinheit 15 zu steuern. Auch hier gibt es neben den Stamm-Schnittstellen 16 Zusatz-Schnittstellen an den einzelnen Fahrzeugen bzw. an der Tragkraftspritze 13c. Auch hier ist eine Bedienzentrale 27 vorgesehen, die eine Vielzahl von Zentral-Schnittstellen 28 aufweist. Insgesamt sind die Bedieneinheiten sämtlicher Systembasen 13 miteinander kompatibel und auch kompatibel zur Bedienzentrale 27, so dass ein flexibler Austausch der Bedieneinheiten 15 möglich ist.

## Patentansprüche

1. Bediensystem zur Bedienung von Funktionseinheiten (12), insbesondere auf dem Gebiet der Feuerwehrtechnik, mit wenigstens einer Systembasis (13), die mit einem Bus-System (19) ausgestattet ist und wenigstens eine zum Bediensystem (11) gehörende Funktionseinheit (12) aufweist, wobei der Funktionseinheit (12) eine Bedieneinheit (15) zugeordnet ist, die in der Lage ist, funktionseinheitsspezifische Steuersignale auszugeben, die von der zugeordneten Funktionseinheit (12) erkennbar sind, wobei die Bedieneinheit (15) an einer Stamm-Schnittstelle (16) an der Systembasis (13) lösbar andockbar oder angedockt ist, wobei die Systembasis (13) wenigstens eine Zusatz-Schnittstelle (18) aufweist, die mit der wenigstens einen Stamm-Schnittstelle (16) über das Bus-System (19) gekoppelt ist und wobei die Bedieneinheit (15) wahlweise an der Stamm-Schnittstelle (16) oder an der Zusatz-Schnittstelle (18) andockbar ist, wobei die Bedieneinheit (15) eine mit der Stamm-Schnittstelle (16) oder der Zusatz-Schnittstelle (18) zusammenpassende und mit diesen in Kontakt bringbare Gegen-Schnittstelle (21) aufweist, **dadurch gekennzeichnet, dass** die Verbindung zwischen der Gegen-Schnittstelle (21) an der Bedieneinheit (15) und der Stamm-Schnittstelle (16) oder Zusatz-Schnittstelle (18) drahtgebunden über ein elektrisches Kabel (25) erfolgen kann.

2. Bediensystem nach Anspruch 1, **dadurch gekennzeichnet, dass** zwischen der Stamm-Schnittstelle (16) oder Zusatz-Schnittstelle (18) und der Gegen-Schnittstelle (21) an der Bedieneinheit (15) ein elektrisches Kabel (25) als Verlängerungskabel eingeschaltet ist.

3. Bediensystem nach Anspruch 1 oder 2, **dadurch gekennzeichnet, dass** die wenigstens eine Systembasis (13) ausgewählt ist aus der Gruppe bestehend aus Einsatzfahrzeug, insbesondere Feuerwehrfahrzeug (13a), Tragkraftspritze (13c), Werfer und Pumpenaggregat.

4. Bediensystem nach einem der vorhergehenden Ansprüche, **dadurch gekennzeichnet, dass** die wenigstens eine Funktionseinheit (12) ausgewählt ist aus der Gruppe bestehend aus Pumpe (12a), Beleuchtungseinrichtung (12b), insbesondere Lichtmast (24), Werfereinrichtung, Kamera, Drehleiter, abrollbares Leitergerüst, Teleskopmast und Teleskopmastbühne.

5. Bediensystem nach einem der vorhergehenden Ansprüche, **dadurch gekennzeichnet, dass** Stamm-Schnittstelle (16), Zusatz-Schnittstelle (18) und Gegen-Schnittstelle (21) als Steckverbinder ausgebildet sind, wobei vorzugsweise der Steckverbinder als Stecker (22) oder Buchse (23) ausgestaltet ist.

6. Bediensystem nach einem der vorhergehenden Ansprüche, **dadurch gekennzeichnet, dass** das elektrische Kabel beidenends jeweils einen Steckverbinder aufweist, über die es einerseits mit der Gegen-Schnittstelle (21) an der Bedieneinheit (15) und andererseits mit der Stamm-Schnittstelle (16) oder der Zusatz-Schnittstelle (18) verbindbar oder verbunden ist.

7. Bediensystem nach einem der vorhergehenden Ansprüche, **dadurch gekennzeichnet, dass** die Bedieneinheit (15) einen Identifikator, insbesondere eine Adresse, aufweist.

8. Bediensystem nach einem der vorhergehenden Ansprüche, **dadurch gekennzeichnet, dass** das Bus-System ein Feldbus-System, insbesondere CAN-Bus-System, ist.

9. Bediensystem nach einem der vorhergehenden Ansprüche, **dadurch gekennzeichnet, dass** es eine externe oder an Bord der Systembasis (13) befindliche Bedienzentrale (27) zur Bedienung sämtlicher Funktionseinheiten (12) aufweist, die wenigstens eine, vorzugsweise mehrere Zentral-Schnittstellen (28), aufweist, an die die Bedieneinheit (15) andockbar ist.

## Claims

1. Operating system for operating functional units (12), in particular in the field of firefighting technology, with at least one system base (13) which is equipped with a bus system (19) and has at least one functional unit (12) belonging to the operating system (11), wherein an operating unit is (15) associated with the functional unit (12), which operating unit is capable of outputting control signals specific to the functional unit, which signals can be recognised by the associated functional unit (12), wherein the operating unit (15) is or can be detachably docked to a master interface (16) at the system base (13), wherein the system base (13) has at least one additional interface (18) which is coupled to the at least one master interface (16) via the bus system (19) and wherein the operating unit (15) can alternatively be docked to the master interface (16) or to the additional interface (18), wherein the operating unit (15) has a mating interface (21) fitting together with the master interface (16) or the additional interface (18) and capable of being brought into contact with same, **characterised in that** the connection between the mating interface (21) at the operating unit (15) and the master interface (16) or additional interface (18) can be wired via an electric cable (25).

2. Operating system according to claim 1, **characterised in that** an electric cable (25) is interpolated as extension cable between the master interface (16) or additional interface (18) and the mating interface (21) at the operating unit (15).

3. Operating system according to claim 1 or 2, **characterised in that** the at least one system base (13) is selected from the group consisting of emergency vehicle, in particular firefighting vehicle (13a), portable pump (13c), water cannon and pump assembly.

4. Operating system according to one of the preceding claims, **characterised in that** the at least one functional unit (12) is selected from the group consisting of pump (12a), lighting equipment (12b), in particular lighting tower (24), water cannon device, camera, aerial ladder, unwindable ladder scaffolding, telescopic mast and telescopic mast stage.

5. Operating system according to one of the preceding claims, **characterised in that** master interface (16), additional interface (18) and mating interface (21) are designed as connectors, wherein preferably the connector is developed as plug connector (22) or socket (23).

6. Operating system according to one of the preceding claims, **characterised in that** the electric cable has a connector at each of the two ends, via which on the one hand it is or can be connected to the mating interface (21) at the operating unit (15) and on the other hand to the master interface (16) or the additional interface (18).

7. Operating system according to one of the preceding claims, **characterised in that** the operating unit (15) has an identifier, in particular an address.

8. Operating system according to one of the preceding claims, **characterised in that** the bus system is a field bus system, in particular a CAN bus system.

9. Operating system according to one of the preceding claims, **characterised in that** it has an operating control unit (27) located externally or on board the system base (13) and which operating unit is for operating all functional units (12), having at least one, preferably a plurality of, central interfaces (28) to which the operating unit (15) can be docked.

## Revendications

1. Système de commande destiné à commander d'unités fonctionnelles (12), en particulier dans le domaine de la technique de lutte anti-incendie, avec au moins une base de système (13), qui est équipée d'un système de bus (19) et présente au moins une unité fonctionnelle (12) appartenant au système de commande (11), dans lequel est associée à l'unité fonctionnelle (12) une unité de commande (15), qui est en mesure d'émettre des signaux de commande spécifiques à l'unité fonctionnelle, qui peuvent être identifiés par l'unité fonctionnelle (12) associée, dans lequel l'unité de commande (15) peut être amarrée ou est amarrée de manière amovible à une interface de référence (16) sur la base de système (13), dans lequel la base de système (13) présente au moins une interface supplémentaire (18), qui est couplée à l'au moins une interface de référence (16) par l'intermédiaire du système de bus (19) et dans lequel l'unité de commande (15) peut être amarrée au choix à l'interface de référence (16) ou à l'interface supplémentaire (18), dans lequel l'unité de commande (15) présente une contre-interface (21) coïncidant avec l'interface de référence (16) ou l'interface supplémentaire (18) ou pouvant être amenée en contact avec celles-ci, **caractérisé en ce que** la liaison entre la contre-interface (21) sur l'unité de commande (15) et l'interface de référence (16) ou l'interface supplémentaire (18) peut être effectuée de manière filaire par l'intermédiaire d'un câble électrique (25).

2. Système de commande selon la revendication 1, **caractérisé en ce qu'**un câble électrique (25) est branché en tant que rallonge entre l'interface de référence (16) ou l'interface supplémentaire (18) et la contre-interface (21) sur l'unité de commande (15).

3. Système de commande selon la revendication 1 ou 2, **caractérisé en ce que** l'au moins une base de système (13) est choisie parmi le groupe constitué de véhicule d'intervention, en particulier véhicule de lutte anti-incendie (13a), motopompe portative (13c), lanceur et groupe pompe-moteur.

4. Système de commande selon l'une quelconque des revendications précédentes, **caractérisé en ce que** l'au moins une unité fonctionnelle (12) est choisie parmi le groupe constitué d'une pompe (12a), d'un dispositif d'éclairage (12b), en particulier d'un mât d'éclairage (24), d'un dispositif lancer, d'une caméra, d'une échelle automobile, d'un échafaudage à échelle déroulable, d'un mât télescopique et d'une plateforme de mât télescopique.

5. Système de commande selon l'une quelconque des revendications précédentes, **caractérisé en ce que** l'interface de référence (16), l'interface supplémentaire (18) et la contre-interface (21) sont réalisées en tant que connecteurs enfichables, dans lequel de préférence le connecteur enfichable est configuré en tant que fiche (22) ou en tant que douille (23).

6. Système de commande selon l'une quelconque des revendications précédentes, **caractérisé en ce que** le câble électrique présente du côté des deux extrémités respectivement un connecteur enfichable, par l'intermédiaire desquels il peut être relié ou est relié d'une part à la contre-interface (21) sur l'unité de commande (15) et d'autre part à l'interface de référence (16) ou à l'interface supplémentaire (18).

7. Système de commande selon l'une quelconque des revendications précédentes, **caractérisé en ce que** l'unité de commande (15) présente un identifiant, en particulier une adresse.

8. Système de commande selon l'une quelconque des revendications précédentes, **caractérisé en ce que** le système de bus est un système de bus de champ, en particulier un système de bus CAN.

9. Système de commande selon l'une quelconque des revendications précédentes, **caractérisé en ce qu'**il présente une unité centrale de commande (27) externe ou se trouvant à bord de la base de système (13), destinée à commander toutes les unités fonctionnelles (12), qui présente au moins une, de préférence plusieurs interfaces centrales (28), auxquelles l'unité de commande (15) peut être amarrée.
